# EUROPEAN PATENT APPLICATION

(11) **EP 3 269 540 A1**
(43) Date of publication of application: **17.01.2018**
(21) Application number: 16179637.0
(22) Date of filing: 15.07.2016
(51) Int. Cl.: B32B 5/02, B32B 5/26, B32B 19/06, B32B 29/02, H01M 2/10, H01M 10/658

(54) **COMPRESSIBLE AND FLEXIBLE COMPOSITE MATERIAL USEFUL IN PARTICULAR AS A CONSTRUCTION MATERIAL FOR BATTERIES**

(71) Applicant: Von Roll Schweiz AG, 4226 Breitenbach (CH)
(72) Inventor: The designation of the inventor has not yet been filed
(74) Representative: Bohest AG

(57) **Abstract**

A layered composite, comprising a) two flexible layers, each comprising a layer of inorganic fibres and a mica laminate; and b) a compressible layer which comprises an inorganic fibre mat and which is sandwiched between said flexible layers. The layered composite is useful as thermal or electrical barrier material for insulating individual battery cells thermally and/or electrically against each other, or for insulating thermally a battery from an environment. The battery is in particular a lithium-ion battery.

## Description

### Field of the Invention

The present invention relates to a compressible composite material useful in particular as a construction material for building reloadable batteries comprising a plurality of single reloadable battery cells or battery cell packs, in particular corresponding lithium-ion batteries.

### Background of the Invention

Batteries comprising a number of reloadable single battery cells like in particular reloadable lithium-ion batteries are known and used in several fields of technique, including e.g. as electric power supply of mobile phones, portable computers like laptop or table computers and in particular as the electric power supply of electric cars or vehicles or hybrid cars.

It is also known that particularly rechargeable battery cells, such as lithium-ion cells, sometimes undergo internal overheating caused by events such as short circuits within the cell, improper cell use, manufacturing defects or exposure to extreme external temperature, which overheating can lead to a so-called thermal runaway when the reaction rate within the cell caused by the high temperature increases to a point where more heat is generated within the cell than can be withdrawn and the generated heat leads to a further increase of the reaction rate and in turn of the generated heat. In lithium-ion batteries for example, the heat generated within such defective cells can reach 500 °C to 1000 °C, in localized hot spots even more.

In particular, it is essential in such cases to interrupt or at least reduce a heat transfer from defective cells or cell packs in the battery to other cells or cell packs which are still working correctly, because the heat generated in a defective battery cell or cell pack can spread out to the neighbouring cells, which in turn can also overheat and then undergo thermal runaway leading to an overheating and thermal runaway of further battery cells or battery packs of the battery and so on, what can result in an extensive damage of the battery pack or battery, and sometimes even of the device containing the battery, e.g. by ignition, combustion and sometimes explosion if too much gaseous reactants are generated within the cells.

It is accordingly usual to provide safety precautions for protecting the environment of overheated battery cells or packs of battery cells against the generated heat, including in particular not yet affected battery cells or packs but also surrounding construction elements of a device or apparatus containing the battery.

For this purpose, it has e.g. been suggested to insert thermally insulating barrier elements inside of a battery in order to prevent or reduce the heat transfer from an overheated battery cell or pack of battery cells to other or battery cells or cell packs of a battery and/or to the environment of the battery.

This is for example described in US 2006/0164795 or US 8,541,126. According to these prior art documents, the thermal barrier elements can e.g. consist of a ceramic material such as aluminium oxide, magnesium oxide, silicon dioxide, calcium silicates, calcium magnesium silicates or alumina silicates, which materials provide high melting temperatures of about 500 °C to about 1500 °C and more, i.e. well above the temperatures normally achieved even short time during a thermal runaway event in a battery, combined with a relatively low thermal conductivity, such as a thermal conductivity of less than 50 W/mK (measured at 25 °C), preferably less than 10 W/mK or even less than 1 W/mK. Such ceramic elements can e.g. consist of plates produced by compressing a number of laminates of said ceramic materials impregnated with a resin of suitable temperature resistance as disclosed in US 2006/0164795.

In copending European application No. 15184792.8 there is also disclosed a compressible composite material useful in particular as thermally insulating barrier element for batteries, which is a layered assembly of n substantially rigid plates and (n-1) compressible layers, which are alternately piled in direction vertical to their largest surface, wherein n represents an integer of 2 or more than 2.

A further desirable property for such thermally insulating barrier elements however is flexibility, not rigidity. The reason for this is that the individual cells within a battery may heat up to different degrees even under normal operation, and particular in the case of an imminent thermal runaway as mentioned above. If one cell heats up more than the adjacent cell then it will expand more in volume than the adjacent cell; the adjacent cell may actually be reduced somewhat in volume if the pressure drop between the adjacent cells becomes large enough. The thermally insulating barrier element may in such a situation not only be compressed but may also be bent, with a convex curvature facing towards the less heated cell. In order to account for such bending it is not only necessary that the thermally insulating barrier elements be compressible, it must also be flexible. Flexibility is also required if the barrier element is to be used to encapsulate an entire battery pack or an overall battery or as an insulating sheath applied to a rigid part of complex surface geometry, such as the cap of a battery. Flexibility is also required if the barrier material is to be fixed to the part to be insulated by means of screws or rivets: At the site where the screws or rivets pass through the insulating barrier it will become more compressed than at the remaining sites, and such compression shall not require excessive torque (with screws) or excessive pressure (with rivets). A flexible insulating barrier will need to be thinner than a rigid insulating barrier, however reducing the thickness of the insulating barrier is at the expense of its thermal and electrical insulating capabilities.

There is thus a need for a flexible insulating barrier element which nevertheless exhibits good thermal and electrical insulation properties.

### Summary of the Invention

Subject of the present invention is therefore a layered composite, comprising
a) two flexible layers, each comprising a layer of inorganic fibres and a mica laminate; and
b) a compressible layer which comprises a fibre mat and which is sandwiched between said flexible layers.

### Brief Description of the Figure

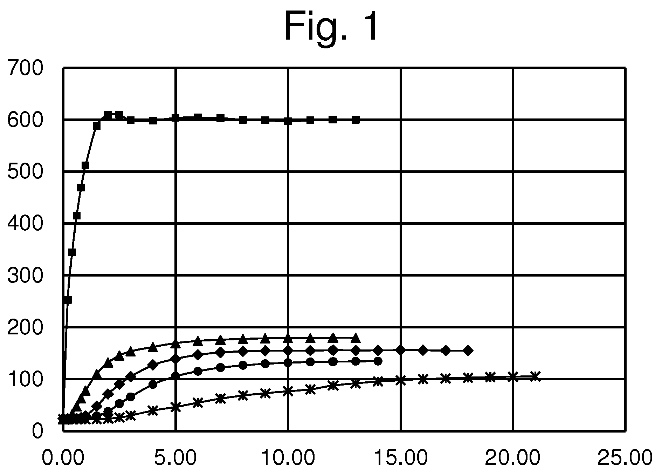

Figure 1 is a graphical representation of the time dependent temperature profile on bottom and top sides of stacks of 1-4 individual sheets of layered composite of the invention, when heated from the bottom side of the stacks.

### Detailed Description of the Invention

### A) Flexible layers FL

The term "flexible layer" refers to a sheet like material having two largest surfaces (one anterior and one posterior), the curvature of which material can be changed by external force (or overpressure, meaning pressure exceeding the normal ambient pressure of 1 atm) acting onto the anterior or posterior surface thereof under conditions under which the flexible layer is intended to be used, in particular at pressures up to 10 atm and temperatures at which the flexible layer does not decompose, i.e. temperatures from about minus 50 to about 750 °C. The change of curvature may be from planar (i.e. no curvature at all) to non-zero or be an increase or decrease from a non-zero curvature already being present in the flexible layer even when no force or overpressure acts on it. "Flexible" plates in the foregoing sense preferably have an elasticity modulus at room temperature of 100 kPa to 10,000 kPa, preferably of 200 kPa to 1,000 kPa. The flexible layers comprise one layer (or sheet) of inorganic fibres IF and, adhered thereto a mica laminate ML.

The flexible layers preferable have a thermal conductivity of less than about 35 W/mK at 25 °C. More preferably, the flexible layers have a thermal conductivity of less than about 10 W/mK at 25 °C, more particularly less than about 3 W/mK at 25 °C, e.g. less than 1 W/mK at 25 °C.

### A.1) Layer of inorganic fibres IF

The inorganic fibres are electrically and thermally insulating and may preferably be selected from the group consisting of glass, asbestos, basalt, silicon carbide and ceramic fibres. A first more preferred example of inorganic fibres are glass fibres, and among the latter still more preferred are E glass fibres (= alumino-borosilicate glass with at the most 1% by weight of alkali metal oxides, based on the remainder of the oxides, used in their manufacture). A second more preferred example are basalt fibres. The titer of the inorganic fibres is preferably in the range of 1-10 tex, preferably of 3-8 tex, more preferably 4-6 tex. The inorganic fibres may be used in the form of a woven or non woven textile layer. If used in a woven textile layer, then the filament count in the warp and weft directions is preferably in the range of 20 to 40 filaments/cm, more preferably in the range of 25 to 35 filaments/cm. Preferably they are used in the form of a woven textile layer, more preferably in the form of a plain weave textile layer, still more preferably a plain weave textile layer wherein the warp and weft filaments are identical and have the same filament count in the warp and weft directions.

The weight per unit are of the layer of inorganic fibres is preferably in the range of 5 to 50 g/m², more preferably in the range of 10 to 40 g/m².

Woven glass fabrics useful for the present invention as the layer of inorganic fibres are commercially available e.g. from Porcher Industries, France, or Interglas, Germany. Woven basalt fabrics useful for the present invention are commercially available e.g. from Basaltex NV, Belgium.

A most preferred textile layer of inorganic fibres is an E glass or basalt fibre plain weave textile layer with filament titer in the range of 4 to 6 tex and with identical fibres in both warp and weft directions and identical filament count in both warp and weft directions, this filament count being in the range of 25 to 35 filaments/cm. Such most preferred textile layers typically have a weight per unit area in the range of 20 to 35 g/m².

### A.2) Mica laminate ML

The mica laminates useful for the instant invention generally consist of particulate mica (muscovite or phlogopite, as a mica papier) adhered to a backing cloth (mostly a glass cloth) by means of an adhesive (in most cases as silicone adhesive, similar as the one exemplified below under A.3)).

For the purposes of the instant invention it is preferred that the mica laminate has a weight per unit area in the range of 50 to 200 g/m², preferably of 100 to 150 g/m². It is furthermore preferred that the mica laminate has a thickness in the range of 0.05 to 0.2 mm, more preferably of 0.05 to 0.15 mm. It is furthermore preferred that the mica is phlogopite.

A most preferred mica laminate consists of a phlogopite mica paper adhered to a glass backing cloth and having a weight per unit area of 100 to 150 g/m² and a thickness in the range of 0.05 to 0.15 mm.

Examples of commercially available mica laminates useful for the instant invention are those marketed by the applicant under the trade names Samicanite®, Miglasil® and Pamitherm. Further examples of such commercially available mica laminates or mica papers are those of Chhaperia or Micamafco, both of India.

### A.3) Adhesive A1 for adhering inorganic fibre layer IF and mica laminate ML

The adhesive preferably used to adhere the layer of inorganic fibres IF, in particular of glass or basalt, and the mica laminate ML together is a thermoresistant and thermosetting (crosslinkable) adhesive, in particular a silicone adhesive, which, when cured, is elastomeric.

More preferred such silicone adhesives may be those in which the siloxyl units have the formula RₙSiO_{(4-n)/2}
in which the n substituents R may be the same or different, preferably the same, and are selected from the group consisting of C₁-C₈ alkyl groups (such as methyl, ethyl, propyl, butyl, pentyl or hexyl, in particular methyl) and C₂-C₈ alkenyl groups (such as vinyl, allyl, butenyl or hexenyl, in particular vinyl). A most preferred silicone adhesive is a pure polydimethylsiloxane or a polydimethylsiloxane in which a fraction of the methyl groups, such as 0.01-0.2% preferably 0.01-0.1%, of the methyl groups, have been replaced by vinyl groups.

Such silicone adhesives are either commercially available or described in the prior art, such as e.g. in US 2010/0282410 A1. These silicone adhesives may be cured at elevated temperatures of typically 150-200 °C using a peroxide catalyst, such as benzoyl peroxide, dicumyl peroxide, di-t-butyl peroxide, 2,5-dimethyl-2,5-di(t-butylperoxy)hexane, t-butyl-perbenzoate and halogenated derivatives of the above-mentioned peroxides such as for example bis(2,4-dichlorobenzoyl) peroxide, 1,6-bis(p-toluoylperoxycarbonyloxy)hexane, 1,6-bis(benzoylperoxy-carbonyloxy)hexane, 1,6-bis(p-toluoylperoxycarbonyloxy)butane and 1,6-bis (2 ,4-dimethylbenzoylperoxycarbonyloxy)hexane.

### B) Compressible layer CL

The compressible layer CL sandwiched between two neighbouring flexible layers FL of the composite material according to the invention comprises a fibre mat FM. Preferably it consists of the fibre mat and gas (in particular air) filling the voids between the fibres of the mat. The lateral sides of the compressible layers are preferably open to the (atmospheric) environment, thereby allowing lateral dissipation of heat, thus additionally reducing the heat conductance through the composite material according to the invention.

The thickness of the compressible layer is according to the invention in the range of 1 to 10 mm, preferably of 2 to 5 mm in uncompressed state.

The term "compressible" in connection with a layer or fibre mat contained in such layer refers to a layer or fibre mat which under an overpressure of 10 kPa ("overpressure" meaning pressure exceeding the normal ambient pressure) can be compressed to 90 percent or less, preferably to 75 percent or less, and most preferably to 50 percent or less, of its thickness in uncompressed state, i.e. when only normal ambient pressure acts on the layer or fibre mat. A "compressible" layer or fibre mat in the foregoing sense may preferably have an isothermal compressibility β_{T} in the range of 100 to 1000 °C of 10⁻⁴ Pa⁻¹ to 10⁻⁵ Pa⁻¹. The compression of the material is preferably reversible, at least in part.

The compressible layer preferably covers substantially (e.g. to about 95 area% or more, in particular to 100 area%) the entire surface of the flexible layers between which it is sandwiched.

### B.1) Inorganic fibre mat FM

The inorganic fibre mat FM in the compressible layer CL preferably has a gas content of 80 to 95 vol%, based on the total geometric volume of the fibre mat. The density of the fibre mat is preferably in the range of 100 to 500 kg/m³, more preferably of 100 to 200 kg/m³. The inorganic fibres contained in the mat are preferably selected from the group consisting of glass, basalt, ceramic, alumina, zirconia, silica, and alumina silicate fibres (such as mullite). Most preferable the inorganic fibres are from glass (E glass) or basalt. They preferably have a length to diameter ratio of at least 100 to 1, preferably at least 500 to 1, e.g. 1000 to 1 or more. The thickness of suitable fibres is preferably between 5 and 250 µm, more preferably between 10 and 150 µm. The fibres have generally polycrystalline or amorphous microstructure. The fibres can preferably withstand permanent temperatures of about 800 to 1400 °C, more preferably of about 1000 to 1350 °C.

The fibre mat FM can be a non-woven material made from said fibres like a ceramic wool, felt or paper or a woven fabric of said fibres. The mat can also comprise mixtures of woven and non-woven forms of ceramic fibres. A non-woven mat is preferred. In the latter case a needled mat is more preferred. Needling may impart the fibres an isotropic orientation in all three spatial directions (length, width, thickness of the mat), whereas a non-needled mat may have an isotropic orientation of the fibres in only two spatial dimensions (length, width of the mat). Since the compressible layer preferably consists only of a fibre mat and entrapped gas, the range of thicknesses for the fibre mats is the same as the one for the overall compressible layer (see B) above).

The fibre mats MF suitable for the present invention have generally a thermal conductivity of less than about 1 W/mK measured at temperatures up to 1200 °C and more preferably less than about 0.5 W/mK, in particular less than 0.35 W/mK at such temperatures.

Most preferred are nonwoven needled silica mats of 100 to 200 kg/m³ and thickness of 2 to 5 mm in uncompressed state. This is equivalent to a weight per unit area in the range of 200-1000 g/m².

Suitable mats are commercially available. Examples there are e.g. the needled silica mats of PD FibreGlass, such as the KF types; the ceramic mats type MT - 1260 and MT - 1430, elastic stitched mats exhibiting a thermal conductivity of less than about 0.35 W/mK measured at temperatures up to 1200 °C produced of all kinds of aluminosilicate fibres without the addition of organic binders available from Europolit^{®} or Fibermax® mats available from Unifrax, which are lightweight, high-temperature resistant (up to about 1650 °C), flexible and resilient mat products exhibiting a thermal conductivity of less than about 0.42 W/mK measured at temperatures up to 1000 °C, composed entirely of Fibermax® polycrystalline mullite fibres and free of organic binders or other additives which could cause outgassing fumes or associated problems. Suitable is also ceramic fibre paper, available e.g. from KT Refractories made from fibres consisting of aluminosilicate and having an organic content of less than 10% and a maximum operation temperature of about 950 to 1200 °C. The aforementioned fibre mat types are, of course, merely exemplary and a skilled person can choose others as long as they provide a layered composite with properties as described herein.

### B.2) Adhesive A2 for adhering flexible layers FL and compressible layer CL together

The adhesive A2 preferably used to adhere together the flexible layers FL and the compressible layer CL may on the one hand preferably be one as outlined above for the adhesive A1. Alternatively and also preferably it may be a thermoresistant single or two-component RTV (room temperature vulcanizing) condensation cure silicone rubber. Such condensation cure silicone adhesives require a humidity of about 5 % to 95 % and a temperature of about 5 to 40 °C to cure (crosslink). For an adhesive film thickness of a fraction of a millimetre the adhesive generally fully cures within a few hours at ambient temperature and humidity conditions. Silicone adhesives of this kind can be e.g. be prepared by co-hydrolysis of dialkyldialkoxysilanes (Rₐ)₂(R_{b}O)₂Si with trialkylalkoxysilanes (Rₐ)₃(R_{b}O)Si, wherein Rₐ and R_{b} are independently selected from unbranched branched C₁-C₄ alkyl (in particular methyl). Resins of this kind are in more detail e.g. described in WO 2013/119561 which is incorporated in its entirety into this description. Preferred commercial silicone adhesives include those listed in paragraph [0021] of WO 2013/119561.

The weight-average molecular weights of such RTV condensation cure silicone adhesives may range e.g. from about 500 to about 7500 g/mol, preferably from about 1000 to about 5000 g/mol, more preferably from about 1000 to 3000 g/mol and can e.g. be determined by gel permeation chromatography techniques (GPC).

When condensation cured, these adhesives become crosslinked rubbery organopolysiloxanes which represent a three dimensional network of polysilicic acid comprising, dependent on the degree of crosslinking, a mixture of units selected from SiO_{4/2} ; (Rₐ)SiO_{3/2} ; (Rₐ)₂SiO_{2/2} and (Rₐ)₃SiO_{1/2}, which are usually referred to as Q, T, D and M units. For the purposes of the invention the cured organopolysiloxane is preferably substantially built from D and T units (DT resins), in view of the desired rubbery nature.

### C) Layered composite of the invention

The layered composite of the invention comprises two flexible layers FL forming the outermost layers thereof. Preferably the orientation of all these layers is as below, using the above defined abbreviations:

IF-(A1)-ML-(A2)-CL-(A2)-ML-(A1)-IF

wherein (A1) and (A2) denote the optional but preferred adhesive layers. A1 and A2 are only optional because in the simplest embodiment the two flexible layers FL and the compressible layer CL may simply be physically held together by the two elements (e.g. battery cells or packs of battery cells) between which it is inserted for thermal and/or electrical insulation purposes. On the other hand, the presence of both adhesive layers A1 and A2 may be advantageous in applications where the layered composite is not held together by the elements it insulates from each other. The presence of A1 or A2, or preferably of both A1 and A2, may furthermore improve the electrical resistivity of the layered composite, because the adhesives as such generally have a higher electrical resistivity than air.

The following parameters are preferred in combination:
IF: E glass or basalt fibre plain weave textile layer with filament titer in the range of 1 to 10 tex; identical fibres in both warp and weft directions; identical filament count in both warp and weft directions.
A1: Siloxane adhesive, peroxide cured.
ML: Muscovite or phlogopite mica paper adhered to a glass backing cloth.
CL: Nonwoven needled silica mat of thickness of 1 to 10 mm in uncompressed state.
A2: As A1, or RTV condensation cured methyl silicone rubber.

The following parameters are most preferred in combination:
IF: E glass or basalt fibre plain weave textile layer with filament titer in the range of 4 to 6 tex; identical fibres in both warp and weft directions; identical filament count in both warp and weft directions, this filament count being in the range of 25 to 35 filaments/cm; weight per unit area of 20 to 35 g/m².
A1: Polydimethylsiloxane adhesive, peroxide cured.
ML: Phlogopite mica paper adhered to a glass backing cloth and having a weight per unit area of 100 to 150 g/m² and a thickness in the range of 0.05 to 0.15 mm.
CL: Nonwoven needled silica mat of 100 to 200 kg/m³ and thickness of 2 to 5 mm in uncompressed state.
A2: As A1.

The layered composites of the present invention can have every size, for example from about 0.01 to about 10 square meters, preferably from about 0.02 to about 3 square meters, more preferably from about 0.02 to about 2 square meters.

The entire composite according to the present invention can preferably be compressed to less than about 85%, preferably to about 80% to about 50%, more preferably to about 75% to 60% of their thickness in uncompressed state.

As indicated above, the layered composite according to the invention shall mainly provide a thermal barrier, preferably a thermal barrier element as a construction element of the housing of an electrical battery or a thermal barrier element inside such a battery which can prevent that an overheating inside of the battery housing can damage the outer environment of said battery housing or the interior of a compartment inside of the battery housing which is separated by a sheet or wall consisting of a layered composite according to the invention from another compartment wherein an overheating occurs. The layered composite can alternatively or in addition thereto, provide an electrical barrier.

The required thermal barrier effect to be provided by a composite material according to the invention depends on the temperature possibly generated on one side of the layered composite in case of an overheating event occurring there and the temperature sensitivity of the environment on the opposite side of the layered composite and can substantially be adjusted by a person of ordinary skill by choosing an appropriate combination of compositions and thicknesses of the flexible layers FL as well as the composition and thickness of the compressible layer CL.

To determine the thermal barrier effect one can e.g. heat an individual sheet of a respective layered composite, or a stack of such sheets, from one side to a predefined temperature, e.g. 600 °C, with a heating device such as e.g. a hot-air blower and measure the temperature on said side of the composite at one or more places as well as the temperature on the other side of the layered composite or stack thereof achieved after a pre-defined time period of exposure to the heat source, e.g. 10 to 30 min. Preferred is a layered composite or stack of individual sheets thereof according to the present invention wherein the temperature measurable at the side facing away from the heat source does not exceed about 150 °C, preferably 120 °C, when the side of the composite facing towards the heat source is exposed for 10 min or even more to a heat effecting a temperature of 600 °C at said surface of the composite.

It is possible to stack n individual sheets of the composite of the invention, wherein n is an integer number of at least 2, preferably 2, 3 or 4, atop of one another. The term "individual" here means discrete sheets, not simply wound up layers as would be present in a wound-up roll of the layered composite. In such stack the sheets of the composite may be adhered to each other, e.g. using an adhesive similar as the one outlined above as adhesive A1 or A2, but this is not necessary. Such stack with n sheets of layered composite preferably then has the following arrangement:

IF-A1-ML-A2-CL-A2-ML-A1-IF-(A1/A2)-[IF-A1-ML-A2-CL-A2-ML-A1-IF-(A1/A2)-]ₙ₋₂-IF-A1-ML-A2-CL-A2-ML-A1-IF

wherein all symbols are as defined above and (A1/A2) indicates the said optional adhesive A1 or A2 to bond two or more or even all of the individual sheets of layered composite together.

Within this stack embodiment, the same most preferred parameters for IF, A1, ML, A2 and CL are preferred in combination as they were exemplified above for the embodiments of the layered composite as such.

Stacks of sheets of layered composite may be advantageous in short term thermal insulation under non-equilibrium conditions (see Example 2).

A further subject of the present invention is the use of a layered composite as described above or of a stack of individual sheets of such layered composite as a thermal barrier element in a battery comprising a plurality of battery cells or a plurality of packs of battery cells, for separating said battery cells or said packs of battery cells thermally or electrically from one another. Preferably, said use prevents that a runaway event occurring in one or more battery cell or packs of battery cells damages adjacent battery cells or packs of battery cells which are separated by the layered composite according to the invention from the battery cell or pack of battery cells wherein the runaway event occurs.

A further subject of the invention is the use of a layered composite as described above or of a stack as described above, for insulating thermally a a battery against an environment. Batteries commonly are included into a housing, and often include a removable cover plate. Such housing may at least in part be provided with an internal or external, preferably internal sheath comprising, or consisting of, the layered composite of the invention or a stack of such layered composites. Alternatively or in addition thereto, said cover plate may be provided with an internal sheat or lining comprising, or consisting of, the layered composite or stack thereof. Since the interior surface of such cover plate may be of complex geometry then again, the flexibility of the layered composite of the invention is again advantageous, allowing to closely and gaplessly match any protuberances or recesses present in said interior surface. The main purposes of such sheath or lining here is a thermal insulation of the battery against the environment, in case of a runaway event, thus preventing adjacent components from overheating (or igniting) themselves. In a further aspect, the invention therefore concerns a battery, in particular a lithium-ion battery, comprising a plurality of single battery cells or of packs of battery cells, characterised in that the cells or cell packs are separated from one another by separating walls comprising, or consisting of, the layered composite of the invention or the stack of individual sheets of layered composite of the invention, as described above.

In a still further aspect the invention therefore concerns a battery characterised in that it is sheathed at least in part by a layered composite of the invention or by or the stack of individual sheets of layered composite of the invention, as described above.

A specific embodiment of such a battery comprises one or more separating walls inside its housing separating the battery housing into two or, preferably, more than two compartments, each of which comprises a part of the battery cells or packs of battery cells of the battery, wherein one or more of the separating walls comprises or consists of a layered composite according to the present invention or a stack thereof. It is still within the scope of the present invention when not all separating walls comprised in the battery consist of layered composites according to the invention (or stacks thereof) and when a part of the separating walls are prior art barrier elements, e.g. as described in US 2006/0164795 or US 8,541,126. Particularly preferred however are batteries, wherein all separating walls comprise, or consist of, a composite material according to the present invention or stack thereof.

The separating walls can be single sheets of layered composite or stacks thereof according to the invention, which are loosely laid into the battery housing in alternating order with battery cells (or packs of battery cells), thereby separating the battery cells or packs of battery cells from one another. These sheets need not necessarily be, but can be, fixed or adhered to the cells or packs of cells. They must however substantially separate spatially one battery cell or one pack of battery cell from the adjacent battery cell(s) or adjacent pack(s) of battery cells, to form a compressible gap between adjacent battery cells or adjacent packs of battery cells.

The invention will now be illustrated by the following non-limiting Examples.

### Examples

### Example 1: Layered composite according to the invention

A layer of inorganic fibres IF (a plain woven E glass fabric of 25 g/m², with filament titer of 5.5 tex in both warp and weft directions and 22 filaments / cm in both warp and weft directions) and a commercial mica laminate ML (vonRoll Samica®, mica paper bound to a backing glass cloth, 120 g/m²) was adhered together using a commercial polydimethylsiloxane adhesive (55% solution in toluene/xylenes, applied at 15 g/m² solids) with peroxide curing according to the adhesive manufacturer's instructions. This gave a flexible layer FL.

A commercial fibre mat FM (a needled non-woven E glass mat of 600 g/m², air content about 94 vol%, based on the total geometric volume of the mat) was provided as the compressible layer CL.

Two layers of the above flexible layer FL and the above compressible layer, all of the same rectangular size, were adhered together using the same adhesive system as used for bonding IF and ML together. This gave a composite of the invention, in which the compressible layer covered 100 area% of the flexible layers by which it is sandwiched.

### Example 2: Thermal insulation properties

The layered composite of Example 1 was tested. Stacks of the composite comprising 1, 2, 3 or 4 layers thereof were prepared and are designated in the following as S1, S2, S3 and S4, respectively. Each stack was fixed in horizontal orientation by means of clamps to a carrier. The lower surface of the stacks was heated with a hot-air blower (Hotwind^{®} from Leister) having a nozzle of 60 mm in diameter from below for 21 minutes. The temperature at the bottom surface of the stacks (facing the hot-air blower) was measured with thermoelements at two positions T1 and T2 having a distance of 20 mm from each other and being located in the centre of the stream of hot air provided by the hot-air blower. Two further thermoelements measured the temperature at the top surface of the stacks (facing away from the hot-air blower) at a position T3 located on said surface directly opposite to point T1 and at a second location T4 having a distance of 50 mm from T3. The temperature was sampled every 2 seconds during the entire experiment. Figure 1 shows the graphical plots of the temperature curves in dependence of the time obtained by this setup. The x-axis is in minutes, the y-axis in degrees Celsius. For clarity reasons in the period from 0 to 1 minutes only the temperatures sampled every 12 seconds are shown, in the period 1 to 3 minutes only the temperatures sampled every 30 seconds are shown, and in the period from from 3 to 21 minutes only the temperatures sampled every 60 seconds are shown. The legend to the Figure is as follows:
■ : Representative measurement of temperature vs. time (average from measurement of positions T1/T2) on the heated bottom surface of a stack (S1 or S2 or S3 or S4). Measurement points after 13 min are not shown since they do not deviate anymore from the equilibrium temperature.
   ▲ Measurement of temperature vs. time (average from positions T3/T4) on top surface of stack S1. Measurement points after 13 min are not shown since they do not deviate anymore from the equilibrium temperature.
      ◆ Measurement of temperature vs. time (average from positions T3/T4) on top surface of stack S2. Measurement points after 18 min are not shown since they do not deviate anymore from the equilibrium temperature.
         - Measurement of temperature vs. time (average from positions T3/T4) on top surface of stack S3. Measurement points after 14 min are not shown since they do not deviate anymore from the equilibrium temperature.
            * Measurement of temperature vs. time (average from positions T3/T4) on top surface of stack S4.

It can be seen from the Figure that the stacks reached an equilibrium temperature of 600 °C at the surface facing the hot-air burner (average from measurement of positions T1/T2) within about 2 min. The stacks S1, S2, S3 and S4 reached at their top surfaces equilibrium temperatures of about 180 °C, 155 °C, 135 °C and 100 °C, respectively (average from measurement of positions T3/T4). This indicates that only one layer of the composite of the invention (stack S1) may be sufficient in most cases to reach acceptable thermal insulation under equilibrium conditions. The speed by which this thermal equilibrium was reached was however greatly reduced when going from S1 to S2 to S3 to S4. This is visible in the period of about 2-4 minutes after start of the test, after the temperature at the bottom surface has reached 600 °C within experimental error. This indicates that for short heating periods such as of 1-4 minutes, where the thermal equilibrium between the two surfaces is not yet reached, stacks comprising several layers of the invention, such as 2 to 4 layers, may be useful, thus in order to delay a heat transfer from one side of the stack to the other side of the stack. It can still furthermore be seen from the Figure that when the temperature at the bottom surface of a stack has not yet reached 600 °C, i.e. at lower temperatures of 100-500 °C and at the first 2 min of the test, this increased delay of heat transfer from bottom surface to top surface is even more pronounced when going from S1 to S2 to S3 to S4. The stack S4, with four layers of the composite of the invention, appears to essentially completely prevent heat transfer from bottom surface to top surface in the initial 2.5 min of the test.

### Example 3: Electrical properties

The same composite according to the invention as described in Example 1 was also tested for its electrical insulation properties at room temperature. A specimen of the composite was compressed to a thickness of 2 mm using the two jaws of a bar clamp and two metallic cylinders each of which was fixed via an electrically insulating layer of to one of the jaws of the bar clamp. One cylinder had a larger diameter of 10 cm and acted as the support for the specimen, the other cylinder had a smaller diameter of 4.8 cm and acted as the compressing piston acting onto the specimen. The two leads of a multimeter in resistance measurement mode were then connected to the two cylinders. The measurement of the electrical resistance yielded 177 MOhm for the composite in the compressed mode. This would correspond, if the layered composite was assumed to be homogeneous, to a resistivity of 177 MOhm×(0.048/2)²×π/0.002 m = 160.1 MOhm/m in this compressed state.

Each of the cylinders was then connected to one of the leads of an adjustable high voltage source, with the specimen still being compressed to 2 mm thickness. The voltage of the high voltage source was then gradually increased until an electric discharge between the two cylinders and passing through the composite occurred, which discharge occurred at a voltage of 6.5 kV. This would correspond, if the layered composite was assumed to be homogeneous, to a dielectric strength of 6.5 kV/0.002 m = 3.25 MV/m in this compressed state.

## Claims

1. A layered composite, comprising
a) two flexible layers FL, each comprising a layer of inorganic fibres IF and a mica laminate ML; and
b) a compressible layer CL which comprises an inorganic fibre mat FM and which is sandwiched between said flexible layers.

2. The layered composite according to claim 1, wherein the mica laminate ML is adhered to the layer of inorganic fibres IF by means of an adhesive A1 and/or the compressible layer CL is adhered to the flexible layers FL by means of an adhesive A2.

3. The layered composite according to claim 1 or 2, having the overall layer structure
IF-(A1)-ML-(A2)-CL-(A2)-ML-(A1)-IF
wherein all symbols are as defined above and wherein (A1) and (A2) denote the individually optional adhesive layers A1 and A2, respectively.

4. The layered composite according to any one of claims 1 to 3, wherein the compressible layer CL has a thickness of 1 to 10 mm.

5. The layered composite according to any one of claims 1 to 3, wherein the compressible layer CL has a thickness of 2 to 5 mm.

6. The layered composite according to any one of claims 1 to 5, wherein the compressible layer CL consists of the fibre mat FM and gas filling the voids between the fibres of the mat.

7. The layered composite according to claim 6, wherein the gas is air.

8. The layered composite according to claim 6 or 7, wherein the gas content of the fibre mat FM is 80 to 95 vol%, based on the total geometric volume of the inorganic fibre mat FM.

9. The layered composite according to any one of claims 1 to 8, wherein the fibres of the inorganic fibre mat FM are selected from the group consisting of glass, basalt, ceramic, alumina, zirconia, silica, and alumina silicate fibres.

10. The layered composite according to any one of claims 1 to 9, wherein the inorganic fibre mat is a non woven mat or a needled non woven mat.

11. A stack comprising 2 or more, preferably 2, 3 or 4, individual sheets of a layered composite according to any one of claims 1 to 10.

12. The use of a layered composite according to any one of claims 1 to 10 or of a stack according to claim 11 as a thermal barrier element in a battery comprising a plurality of battery cells or a plurality of packs of battery cells for insulating said battery cells or said packs of battery cells thermally from one another; or as a thermal barrier element for insulating a battery thermally from an environment.

13. The use of a layered composite according to any one of claims 1 to 10 or of a stack according to claim 11 as an electrical insulation element in a battery comprising a plurality of battery cells or a plurality of packs of battery cells, for insulating said battery cells or said packs of battery cells electrically from one another.

14. A battery **characterised in that** it comprises a plurality of battery cells or a plurality of battery cells and said battery cells or said packs of battery cells, are separated from one another by separating walls comprising or consisting of a layered composite according to any one of claims 1 to 10 or comprising or consisting of a stack according to claim 11; or **characterised in that** it is sheated at least in part by a layered composite according to any one of claims 1 to 10 or by a stack according to claim 11.

15. The battery according to claim 14, which is a lithium-ion battery.
